# EUROPÄISCHE PATENTSCHRIFT

(11) **EP 4 282 710 B1**
(45) Veröffentlichungstag und Bekanntmachung des Hinweises auf die Patenterteilung: **07.08.2024**
(21) Anmeldenummer: 22175214.0
(22) Anmeldetag: 24.05.2022
(51) Int. Cl.: B60R 19/18, B60R 19/26

(54) **STOSSFÄNGERANORDNUNG AUFWEISEND EINEN QUERTRÄGER SOWIE CRASHBOXEN**
BUMPER ASSEMBLY COMPRISING A CROSS BEAM AND CRASH BOXES
AGENCEMENT DE PARE-CHOCS COMPRENANT UNE TRAVERSE, AINSI QUE BOÎTIERS AMORTISSEURS

(43) Veröffentlichungstag der Anmeldung: 29.11.2023
(73) Patentinhaber: Benteler Automobiltechnik GmbH, 33102 Paderborn (DE)
(72) Erfinder: SCHILLER, Andreas, 59590 Ehringhausen (DE); FROST, Georg, 32839 Steinheim (DE); SCHRÖTER, Martin, 33102 Paderborn (DE)
(74) Vertreter: Osterhoff, Utz

(56) Entgegenhaltungen:
- EP-A1- 2 497 688
- EP-A2- 2 325 058
- JP-A- 2012 206 538
- US-A- 4 272 114
- US-A1- 2002 053 805
- US-A1- 2006 028 032
- US-A1- 2007 176 440
- US-B1- 6 361 092

## Beschreibung

Die vorliegende Erfindung betrifft eine Stoßfängeranordnung gemäß den Merkmalen im Oberbegriff von Anspruch 1.

Aus dem Stand der Technik sind Stoßfängeranordnungen bekannt, die frontseitig oder endseitig an einem Kraftfahrzeug angeordnet sind. Diese Stoßfängeranordnungen dienen der Umwandlung von Crashenergie in Umformarbeit im Falle eines Aufpralls des Kraftfahrzeugs auf einen Gegenstand.

Solche Stoßfängeranordnungen weisen zumeist einen Querträger auf, der sich im Wesentlichen in Kraftfahrzeugquerrichtung erstreckt und zumeist eine Breite aufweist, die im Wesentlichen dem Kraftfahrzeug selbst entspricht bzw. geringfügig kleiner ist. Ein solcher Querträger ist über Crashboxen mit dem Kraftfahrzeug verbunden. Die Crashboxen sind zumeist frontseitig an Längsträger, im Falle einer vorderen Stoßfängeranordnung, angeordnet. Der Querträger und die Crashboxen sind in der Regel separat voneinander hergestellte Bauteile, die miteinander gefügt werden. Als bekannteste Varianten sind Schraubverbindungen oder Schweißverbindungen bekannt.

Eine Problematik besteht im Falle eines Aufpralls, insbesondere eines zentralen Aufpralls, da es beispielsweise durch einen Pole bzw. Pfahl zu einem Abreißen in der Fügeverbindung zwischen Querträger und den Crashboxen kommen kann, insbesondere, wenn sich der Querträger selbst in sich nochmals verformt.

Eine ähnliche Problemstellung und ein alternativer Lösungsvorschlag wird beispielsweise in der WO 2015 145 835 A1 offenbart.

Ferner sind aus der US 2006/028032 A1, die den Oberbegriff des Anspruchs 1 bildet, und JP 2012 206538 A sowie EP 2 325 058 A2 und US 6,361,092 B1 Stoßfängeranordnungen bekannt, bei welchen Aussparungen im Querträger innerhalb eines Anbindungsbereichs einer dahinterliegenden Crashbox oder Längsträger ausgebildet sind.

Aufgabe der vorliegenden Erfindung ist es, eine Stoßfängeranordnung bereit zu stellen, die die Crashperformance bei einer eingangs genannten Stoßfängeranordnung steigert und insbesondere im Crashfall ein Abreißen des Querträgers von den Crashboxen verhindert.

Die zuvor genannte Aufgabe wird erfindungsgemäß bei einer Stoßfängeranordnung mit den Merkmalen im Anspruch 1 gelöst.

Die Stoßfängeranordnung weist einen Querträger auf. Der Querträger selbst ist als im Querschnitt geschlossenes Hohlprofil ausgebildet. Bevorzugt ist der Querträger als Strangpressprofil hergestellt in Form eines Leichtmetallwerkstoffes basierend auf einer Aluminiumlegierung.

Der Querträger ist über Crashboxen an einem Kraftfahrzeug gekoppelt. In Kraftfahrzeugquerrichtung orientiert, weist der Querträger Anbindungsbereiche auf. Auf die Kraftfahrzeugquerrichtung bezogen, befinden sich dann die Crashboxen auf Höhe der Anbindungsbereiche bzw. der Anbindungsbereich ist so breit, wie eine Crashbox ist. Der Querträger kann in Kraftfahrzeugquerrichtung seitlich in Endbereichen über die Crashboxen überstehen.

Erfindungsgemäß ist im Anbindungsbereich einer Crashbox in einer Oberwand, einer Unterwand oder einem Mittelsteg des Querträgers ein in Kraftfahrzeuglängsrichtung orientierter Schlitz ausgebildet. Der Schlitz ermöglicht es dabei, dass zunächst bei normalen Aufprallszenarien eines Querträgers die Crashperformance des Querträgers selber nicht oder in zu vernachlässigender Weise beeinträchtigt wird.

Der Schlitz unterbindet jedoch in ausgewählten Abschnitten des Querträgers die Übertragung von Schubspannungen zwischen der Vorderwand und der Hinterwand des Querträgers und erlaubt darüber eine definierte bzw. eingeschränkte Relativbewegung. Hierdurch können Schnittlasten, insbesondere in Anbindungsbereichen der Crashbox reduziert werden, so dass insbesondere die Anbindung der Crashboxen entlastet werden. Die Anbindung der Crashbox findet im Rahmen der Erfindung vorzugsweise durch ein stoffschlüssiges Koppeln, insbesondere Verschweißen statt.

Besonders bevorzugt weist der Schlitz selbst eine Länge auf, die größer ist als 50 % der Tiefe des Querträgers in Kraftfahrzeuglängsrichtung. Dies bedeutet, dass der Schlitz sich mit seiner Längserstreckung mindestens über die Hälfte und der Tiefe des Querträgers in Kraftfahrzeuglängsrichtung erstreckt.

Der Schlitz weist selber eine Breite auf, die kleiner gleich der Länge des Schlitzes ist. Ein vorderer Abschnitt und/oder ein hinterer Abschnitt des Schlitzes weist bevorzugt eine Breite auf, die mindestens 5 mm beträgt.

Der Schlitz kann dabei vollständig in die Fahrtrichtung orientiert angeordnet sein. Insbesondere bei einem gekrümmt verlaufenden Querträger wäre dann der Schlitz nicht rechtwinklig zum Längsverlauf des Querträgers orientiert, sondern in Kraftfahrzeuglängsrichtung orientiert. Der Schlitz kann jedoch auch in einem Winkel von 80 bis 100 Grad, besonders bevorzugt von 85 bis 95 Grad zu einer Längsachse des Querträgers angeordnet sein. Besonders bevorzugt kann der Schlitz auch im Wesentlichen rechtwinklig zur Längsachse des Querträgers an der Position des Schlitzes angeordnet sein. Im Falle eines Aufprallszenarios wird somit insbesondere die auf die Kraftfahrzeugquerrichtung bezogen außenliegende Schweißnaht zwischen Crashbox und Querträger entlastet.

Zur Herstellung des Schlitzes wird insbesondere ein mechanisches Nachbearbeiten, beispielsweise Ausschneiden, Stanzen, Prägen verwendet. In diesem Fall ist der Schlitz umlaufend vollständig ausgespart.

Es hat sich jedoch ein gleicher Effekt des Schlitzes erwiesen, bei vergünstigten Herstellungskosten gleichzeitig bei einer höheren Crashperformance in Kraftfahrzeuglängsrichtung, wenn der Querträger im Bereich des Schlitzes umlaufend oder abschnittsweise ausgeschnitten ist und ein stehenbleibender Teil des Schlitzes dann klappenartig abgebogen ist. Der stehenbleibende Teil ist insbesondere in Kraftfahrzeuglängsrichtung orientiert. Hierdurch wird die Schubstarrheit von Obergurt, Mittelsteg oder Untergurt durch die Aussparungen des Schlitzes nicht oder nur unwesentlich reduziert, gleichzeitig jedoch die in Kraftfahrzeugquerrichtung auftretende Entlastung durch die Schlitzfunktion realisiert.

Insbesondere bei einem Querträger der als Mehrkammerhohlprofil ausgebildet, können auch mehrere Schlitze ausgebildet sein. Diese Schlitze können nebeneinander in Oberwand, in Unterwand und/oder dem Mittelsteg ausgebildet sein. Es können auch mehrere Schlitze über Oberwand, Unterwand und Mittelsteg verteilt sein. Mithin kann beispielsweise ein Schlitz in der Oberwand und in der Unterwand ausgebildet sein. Es kann auch zusätzlich oder alternativ ein Schlitz im Mittelsteg ausgebildet sein.

Der Schlitz selbst weist einen Längsverlauf auf, der im Wesentlichen geradlinig ausgebildet ist. Der Schlitz kann jedoch auch in Draufsicht eine konturierte Form aufweisen, insbesondere eine achtförmig konturierte Form. Dann ist der vordere Teil des Schlitzes und der hintere Teil des Schlitzes breiter als der mittlere Teil, wobei die Breite des Schlitzes im Wesentlichen in Kraftfahrzeugquerrichtung orientiert ist.

Der Anbindungsbereich erstreckt sich in Kraftfahrzeugquerrichtung über einen Bereich von beispielsweise ca. 5 bis 20 cm, mithin entspricht im Wesentlichen der Breite der Crashbox. Der Schlitz ist, bezogen auf die Kraftfahrzeugquerrichtung bevorzugt im Wesentlichen mittig im Anbindungsbereich angeordnet oder aber ein Schlitz ist auf Querrichtung bezogen, außenseitig jedoch innerhalb des Anbindungsbereiches angeordnet. Durch das Anordnen innerhalb des Anbindungsbereiches wird wiederum in einem Crashszenario eine Entlastung der auf die Kraftfahrzeugquerrichtung bezogen außenliegende Schweißnaht im Anbindungsbereich zwischen Crashbox und Querträger realisiert.

Im Falle von mehreren Schlitzen, die auf unterschiedlichen Ebenen, also in Oberwand, Mittelsteg oder Unterwand angeordnet sind bzw. auch nebeneinander angeordnet sind können die einzelnen Schlitze unterschiedliche Längen und/oder Breiten offenbaren. Ebenfalls können die Schlitze, bezogen auf die Kraftfahrzeugquerrichtung in Oberwand, Mittelsteg und Unterwand an unterschiedlichen Stellen positioniert sein.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung. Es zeigen
- Figur 1a und: b eine Stoßfängeranordnung, bekannt aus dem Stand der Technik vor und nach einem Aufprall,
- Figur 2a und: b eine erfindungsgemäße Stoßfängeranordnung,
- Figur 3a bis c: eine Querträgeranordnung mit einem erfindungsgemäßen Schlitz,
- Figur 4a und b: verschiedene Konturierungen von Schlitzen,
- Figur 5a bis c: eine verschiedene Längsorientierung eines jeweiligen Schlitzes,
- Figur 6a bis f: eine Draufsicht und Längsschnittansichten durch einen Schlitz,
- Figur 7a bis c: Orientierung bzw. Platzierung eines Schlitzes in Relation zu einem jeweiligen Anbindungsbereich und
- Figur 8: eine abgeklappte Ausgestaltung eines Schlitzes.

In den Figuren werden für einzelne Bauteile die selben Bezugszeichen verwendet, auch wenn eine wiederholte Beschreibung aus Vereinfachungsgründen entfällt.

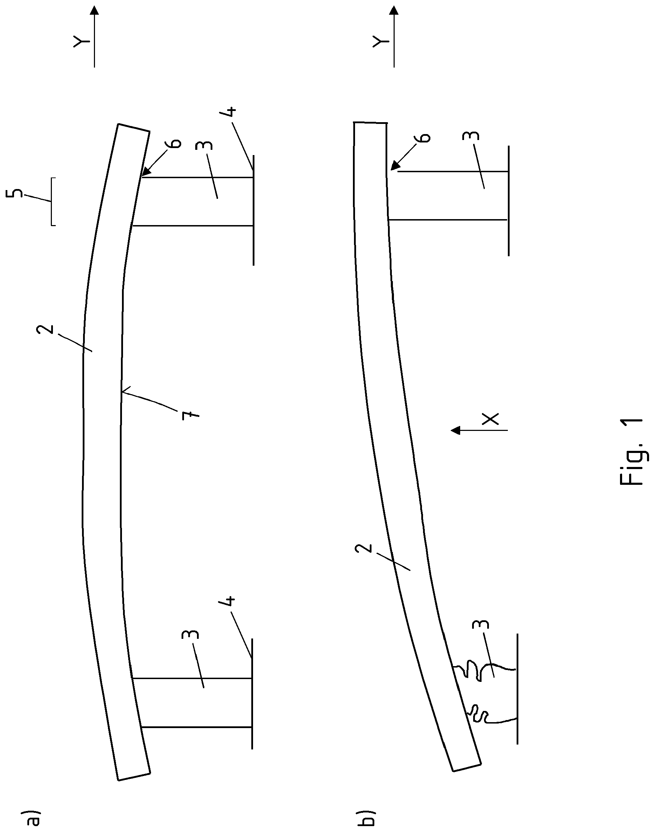

Figur 1a und 1b zeigen eine aus dem Stand der Technik bekannte Stoßfängeranordnung 1 zur Anordnung an einem nicht näher dargestellten Kraftfahrzeug. Die Stoßfängeranordnung weist dazu einen Querträger 2 auf und ist über Crashboxen 3, beispielsweise über Flanschplatten 4 mit einem nicht näher dargestellten Kraftfahrzeug gekoppelt. In einem Anbindungsbereich 5 ist bei einem jeweiligen Anbindungsbereich 5, welcher sich in Kraftfahrzeugquerrichtung Y erstreckt, die Crashbox 3 mit der Stoßfängeranordnung 1 über eine im Bereich von Bezugszeichen 6 nicht näher dargestellte Schweißnaht 6 gekoppelt. Insbesondere ist die Schweißnaht 6 einmal vollständig umlaufend ausgebildet. Die Crashbox 3 kann beispielsweise direkt an eine Rückwand 7 des Querträgers 2 stirnseitig anliegen und ist dann umlaufend mit einer Schweißnaht gekoppelt. Im Falle eines Fahrzeugcrashes, beispielsweise hier dargestellten RCAR Bumpertests, deformiert die auf die Bildebene dargestellte linke Crashbox, was zu einer entsprechenden Belastung der außenliegenden Schweißnaht im Bereich von Bezugszeichen 6 führt und hier zu einem Ablösen von Querträger 2 von auf der Bildebene darstellten rechter Crashbox 3 zumindest auf die Kraftfahrzeugquerrichtung Y bezogenen äußeren Bereich erfolgen. Dieser Effekt tritt umso mehr auf, je weniger der Querträger 2 selbst deformierbar ist bzw. umso Biegesteifer der Querträger 2 selbst ausgebildet ist.

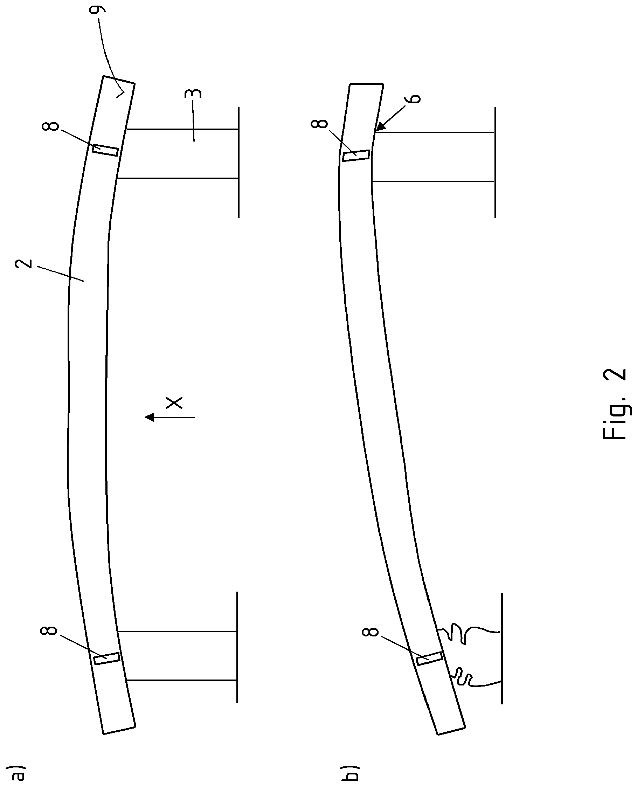

Hier greift die vorliegende Erfindung ein gemäß Figur 2a und 2b dargestellt. Erfindungsgemäß ist im jeweiligen Anbindungsbereich 5 ein Schlitz 8 ausgebildet. Der Schlitz selbst ist in Kraftfahrzeuglängsrichtung X orientiert angeordnet, hier in einer Oberwand 9 des Querträgers. Im Crashfall, dargestellt in Figur 2b verformt sich der Querträger 2 im Bereich des Schlitzes 8 und baut dabei Spannungen ab, dergestalt, dass es nicht zu einem Ablösen der Schweißnaht 6 im Bereich von Bezugszeichen 6 kommt. Auf die Bildebene bezogen links dargestellt, wird jedoch gleichzeitig die Crashperformance des Querträgers 2 bei direktem Auftreffen nicht nachteilig beeinflusst. Mithin bleibt der Querträger 2 im Bereich des Schlitzes 8 in Kraftfahrzeuglängsrichtung X formstabil.

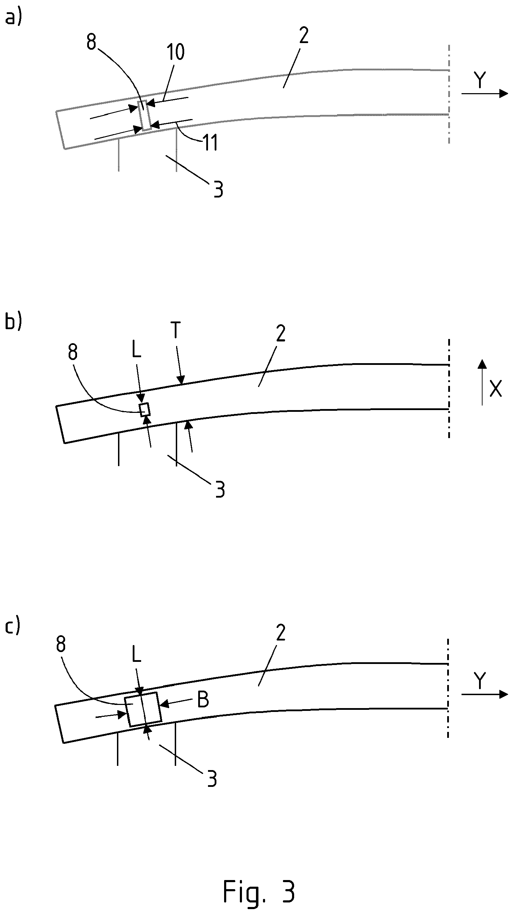

Figur 3a bis c zeigt eine jeweilige Detailansicht einer linken Seite des Querträgers 2. Der Schlitz 8 weist in einem vorderen Bereich und/oder einem hinteren Bereich eine Breite in Kraftfahrzeugquerrichtung Y von mindestens 5 mm auf, was in Figur 3a dargestellt ist. Der Schlitz weist eine Länge auf, die mindestens der Hälfte der Tiefe T des Querträgers 2 in Kraftfahrzeuglängsrichtung X entspricht. Dies ist in Figur 3b dargestellt. In Figur 3c dargestellt ist, dass der Schlitz 8 eine Breite B aufweist, die kleiner ist in Relation zu Länge des Schlitzes 8. Die Breite B erstreckt sich dabei im Wesentlichen in Kraftfahrzeugquerrichtung Y.

Durch die Breite der vorderen und hinteren Bereiche des Schlitzes 8 (also in der Bildebene die obere und untere Schlitzkante) wird eine ausreichende Deformierbarkeit näherungsweise als Parallelverschiebung erreicht.

Der Schlitz 8 ist rechtwinklig zu einer Längsachse 12 des Querträgers 2 orientiert angeordnet. Der Schlitz 8 ist somit in einem Winkel von 60 bis 120, vorzugsweise 80 bis 100 Grad zur Kraftfahrzeugquerrichtung Y orientiert angeordnet. Der Schlitz 8 kann auch alternativ in einem Winkel von 80 bis 100 Grad zur Längsachse 12 des Querträgers 2 in diesem Radius ausgebildet sein.

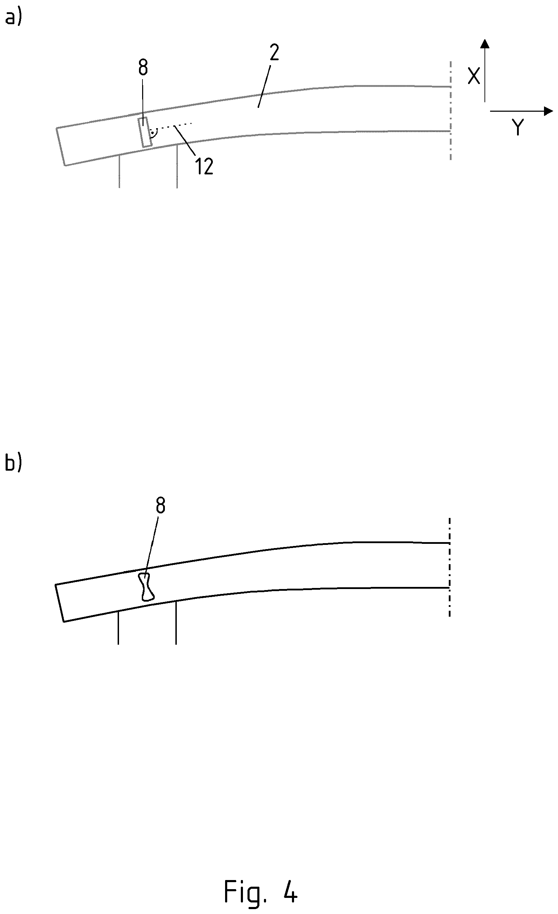

Figur 4b zeigt eine konturierte Draufsicht auf einen Schlitz 8. Hier ist der Schlitz achtförmig bzw. hundeknochenförmig ausgebildet. Der vordere Bereich 10 und der hintere Bereich 11 des Schlitzes 8 sind somit breiter als ein mittlerer Bereich des Schlitzes 8 ausgebildet, jeweils bezogen auf die Kraftfahrzeuglängsrichtung X.

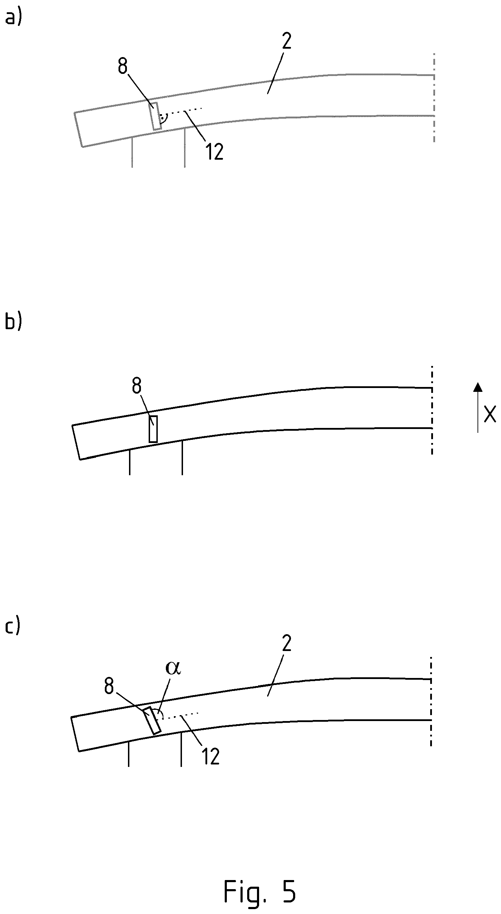

Figur 5a bis 5c zeigen unterschiedliche Orientierungen des Schlitzes 8. Hier dargestellt ist der Schlitz 8 gemäß Figur 5a in einem rechten Winkel angeordnet zur Längsachse 12 des Querträgers 2. Gemäß Figur 5b ist der Schlitz 8 exakt in Kraftfahrzeuglängsrichtung X orientiert angeordnet. Gemäß Figur 5c ist der Schlitz 8 in einem Winkel α von 80 bis 100 Grad zu einer Längsachse 12 des Querträgers angeordnet.

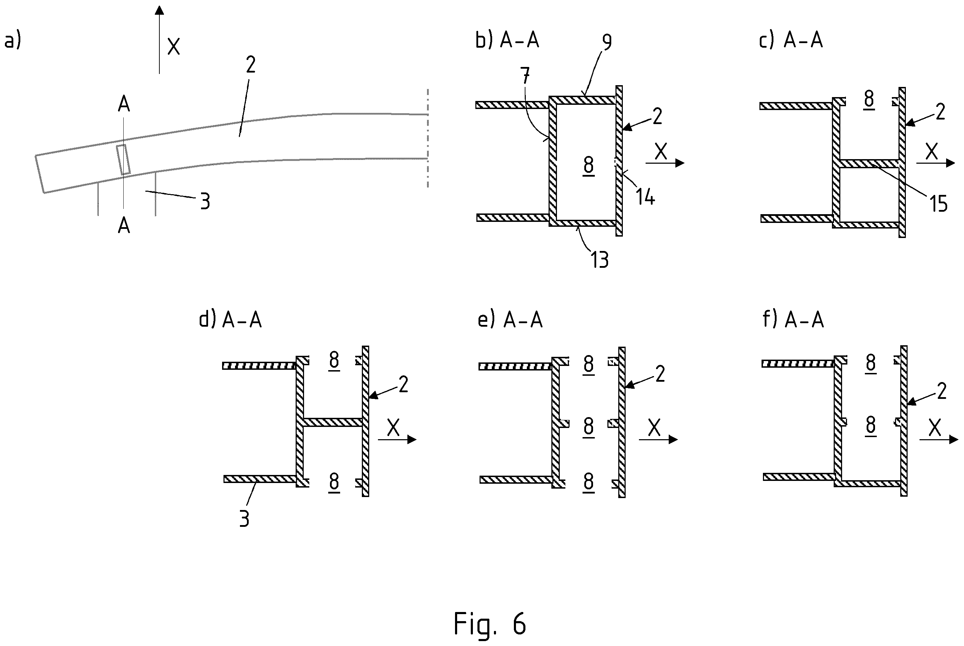

Figur 6a bis f zeigen eine Draufsicht zu verschiedenen Querschnittsansichten gemäß der Schnittlinie A-A aus Figur 6a. Der Querträger 2 selbst ist hier im Querschnitt als Zweikammerhohlprofil ausgebildet. Der Querträger 2 selbst weist dazu eine Oberwand 9, eine Unterwand 13, eine Rückwand 7 sowie eine Vorderwand 14 auf. Der Querträger 2 weist ferner einen Mittelsteg 15 auf. Im Falle von Figur 6b ist der Schlitz 8 nur im Mittelsteg 15 ausgebildet, mithin ist der Mittelsteg 15 entfernt. Im Falle von Figur 6c ist der Schlitz im Bereich der Oberwand 9 ausgebildet. Im Falle von Figur 6d ist der Schlitz 8 im Bereich der Oberwand 9 und der Unterwand 13 ausgebildet. Im Falle der Figur 6e ist der Schlitz 8 in Oberwand 9, Mittelsteg 15 und Unterwand 13 ausgebildet und im Falle der Figur 6f ist der Schlitz 8 in der Oberwand 9 und im Mittelsteg 15 ausgebildet.

Die Länge L des jeweiligen Schlitzes 8 hängt insbesondere davon ab, wieviele Schlitze 8 angeordnet sind. Ist nur eine Wand, also die Oberwand 9, der Mittelsteg 15 oder die Unterwand 13 geschlitzt, so ist die Länge L des Schlitzes 8 mindestens 70 %, bevorzugt 80 bis 100 % der Tiefe T des Querträgers 2. Länge L des Schlitzes 8 und Tiefe T des Querträgers 2 sind beispielsweise aus Figur 3b entnehmbar, mindestens 70 %, bevorzugt 80 bis 100 %.

Sind zwei von drei Wänden geschlitzt, also ist beispielsweise ein Schlitz 8 in Oberwand 9 und im Mittelsteg 15, so ist die Länge L des Schlitzes 8 mindestens 60 %, bevorzugt 70 bis 95 % der Tiefe T des Querträgers 2.

Sind alle Wände geschlitzt, also ist ein Schlitz in der Oberwand 9, im Mittelsteg 15 und ein Schlitz in der Unterwand 13, so beträgt die Länge L eines jeden Schlitzes 8 mindestens 50 % bevorzugt 60 bis 90 % der Tiefe T des Querträgers 2.

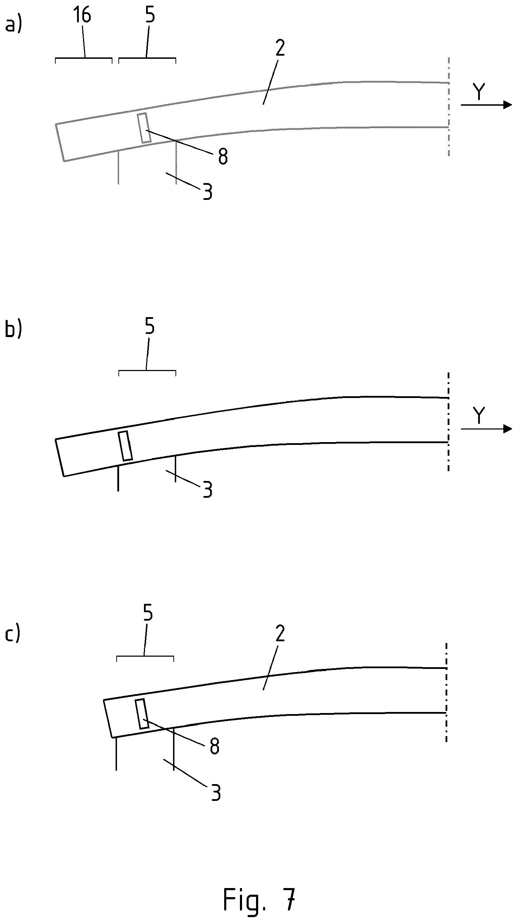

Figur 7a bis c zeigen eine unterschiedliche Positionierung des Schlitzes 8 im Querträger 2 im Anbindungsbereich 5. Gemäß Figur 7a ist der Schlitz im Wesentlichen mittig im Anbindungsbereich 5, bezogen auf die Kraftfahrzeugquerrichtung Y positioniert.

Gemäß Figur 7b ist der Schlitz außermittig positioniert und zwar, bezogen auf die Kraftfahrzeugquerrichtung Y außen im Anbindungsbereich 5 positioniert. Gemäß Figur 7a und b sind jeweils Endbereiche 16 vorgesehen, die außenseitig über die Crashbox 3 überstehend ausgebildet sind. Gemäß Figur 7c ist kein wesentlicher Endbereich 16 außenseitig über die Crashbox 3 überstehend ausgebildet und der Schlitz im Wesentlichen mittig im Anbindungsbereich 5 vom Querträger an die Crashbox 3 angeordnet.

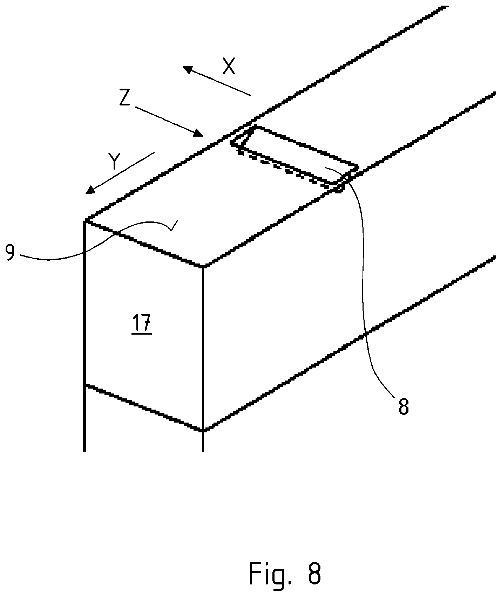

Figur 8 zeigt eine Seitenansicht auf einen erfindungsgemäßen Querträger 2. Hier ist ein Schlitz 8 in der Oberwand 9 ausgebildet. Der Schlitz 8 ist dazu an der Vorderwand 14 an einer außen liegenden Seite und an der Hinterseite ausgeschnitten und dann klappenartig in einen Innenraum 17 des Querträgers 2 abgebogen. Der Schlitz 8 kann jedoch auch wie in den anderen Figuren dargestellt, vollständig ausgeschnitten sein.

### Bezugszeichen:

- 1 -: Stoßfängeranordnung
- 2 -: Querträger
- 3 -: Crashboxen
- 4 -: Flanschplatte
- 5 -: Anbindungsbereich
- 6 -: Schweißnaht
- 7 -: Rückwand
- 8 -: Schlitz
- 9 -: Oberwand
- 10 -: vorderer Bereich zu 8
- 11 -: hinterer Bereich zu 8
- 12 -: Längsachse zu 2
- 13 -: Unterwand
- 14 -: Vorderwand
- 15 -: Mittelsteg
- 16 -: Endbereich
- 17 -: Innenraum

- X -: Kraftfahrzeuglängsrichtung
- Y -: Kraftfahrzeugquerrichtung
- L -: Länge zu 8
- T -: Tiefe zu 2
- B -: Breite zu 8

## Patentansprüche

1. Stoßfängeranordnung (1), aufweisend einen Querträger (2), welcher über Crashboxen (3) an einem Kraftfahrzeug gekoppelt ist, wobei der Querträger (3) eine Rückwand (7) sowie Anbindungsbereiche (5) aufweist, in denen die Crashboxen (3) an den Querträger (2) gekoppelt sind, wobei der Querträger (2) im Querschnitt als geschlossenes Hohlprofil ausgebildet ist, **dadurch gekennzeichnet, dass** die Crashboxen (3) stirnseitig direkt an der Rückwand (7) anliegen und umlaufend mit einer Schweißnaht gekoppelt sind und dass im Anbindungsbereich (5) einer Crashbox (3) in einer Oberwand (9), Unterwand (13) und/oder einem Mittelsteg (5) des Querträgers (2) ein in Kraftfahrzeuglängsrichtung (X) orientierter Schlitz (8) ausgebildet ist, dergestalt, dass eine in Kraftfahrzeugquerrichtung (Y) außenliegende Schweißnaht (6) zwischen Crashbox (3) und Querträger (2) in einem Crashszenario entlastet ist.

2. Stoßfängeranordnung (1) nach Anspruch 1 oder 2, **dadurch gekennzeichnet, dass** der Schlitz (8) eine Länge (L) aufweist, die größer ist, als 50 %, bevorzugt > 70 % der Tiefe (T) des Querträgers (2) in Kraftfahrzeuglängsrichtung (X).

3. Stoßfängeranordnung (1) nach einem der vorangehenden Ansprüche, **dadurch gekennzeichnet, dass** der Schlitz (8) eine Breite (B) aufweist, die kleiner gleich der Länge (L) des Schlitzes (8) ist.

4. Stoßfängeranordnung (1) nach einem der vorangehenden Ansprüche, **dadurch gekennzeichnet, dass** eine Längserstreckung des Schlitzes (8) in einem Winkel von 60 und 120 Grad, bevorzugt 75 bis 105 Grad, besonders bevorzugt 80 bis 100 Grad, bevorzugt 85 bis 95 Grad zu einer Längsachse (12) des Querträgers (2) angeordnet ist.

5. Stoßfängeranordnung (1) nach einem der vorangehenden Ansprüche, **dadurch gekennzeichnet, dass** der Querträger (2) im Bereich des Schlitzes (8) vollständig ausgespart ist.

6. Stoßfängeranordnung (1) nach einem der vorangehenden Ansprüche, **dadurch gekennzeichnet, dass** der Querträger (2) im Bereich des Schlitzes (8) umlaufend abschnittsweise ausgeschnitten ist und ein stehenbleibender Teil klappenartig abgebogen ist.

7. Stoßfängeranordnung (1) nach einem der vorangehenden Ansprüche, **dadurch gekennzeichnet, dass** der Querträger (2)eine Oberwand (9), eine Unterwand (13) und einen Mittelsteg (15) aufweist.

8. Stoßfängeranordnung (1) nach einem der vorangehenden Ansprüche, **dadurch gekennzeichnet, dass** mehrere Schlitze (8) im Anbindungsbereich (5) angeordnet sind, insbesondere in der Oberwand (9), Unterwand (3) und/oder dem Mittelsteg (15).

9. Stoßfängeranordnung (1) nach einem der vorangehenden Ansprüche, **dadurch gekennzeichnet, dass** der Schlitz (8) in seinem Längsverlauf geradlinig ausgebildet ist oder dass der Schlitz (8) achtförmig konturiert ausgebildet ist.

10. Stoßfängeranordnung (1) nach einem der vorangehenden Ansprüche, **dadurch gekennzeichnet, dass** der Schlitz (8), bezogen auf die Kraftfahrzeugquerrichtung (Y) im Wesentlichen mittig im Anbindungsbereich (5) angeordnet ist oder dass der Schlitz (8), außenseitig im Anbindungsbereich (5) angeordnet ist.

## Claims

1. Bumper assembly (1), having a cross beam (2), which is coupled to a motor vehicle via crash boxes (3), wherein the cross beam (3) has a rear wall (7) as well as connection regions (5), in which the crash boxes (3) are coupled to the cross beam (2), wherein the cross beam (2) is designed as a closed hollow profile in cross section, **characterised in that** the end faces of the crash boxes (3) directly abut the rear wall (7) and are circumferentially coupled by a welded seam and that a slot (8) oriented in the longitudinal direction (X) of the motor vehicle is formed in an upper wall (9), a lower wall (13) and/or a central web (5) of the cross beam (2) in the connection region (5) of a crash box (3), such that the stress on an external welded seam (6) in the transverse direction (Y) of the motor vehicle between the crash box (3) and cross beam (2) is relieved in a crash scenario.

2. Bumper assembly (1) according to claim 1 or 2, **characterised in that** the slot (8) has a length (L), which is greater than 50%, preferably > 70%, of the depth (T) of the cross beam (2) in the longitudinal direction of the motor vehicle (X).

3. Bumper assembly (1) according to any one of the preceding claims, **characterised in that** the slot (8) has a width (B), which is smaller than or equal to the length (L) of the slot (8).

4. Bumper assembly (1) according to any one of the preceding claims, **characterised in that** a longitudinal extension of the slot (8) is arranged at an angle of 60 to 120 degrees, preferably 75 to 105 degrees, most preferably 80 to 100 degrees, preferably 85 to 95 degrees, to a longitudinal axis (12) of the cross beam (2).

5. Bumper assembly (1) according to any one of the preceding claims, **characterised in that** the cross beam (2) is completely recessed in the region of the slot (8).

6. Bumper assembly (1) according to any one of the preceding claims, **characterised in that** the cross beam (2) is cut out circumferentially in sections in the region of the slot (8) and a remaining part is bent like a flap.

7. Bumper assembly (1) according to any one of the preceding claims, **characterised in that** the cross beam (2) has an upper wall (9), a lower wall (13) and a central web (15).

8. Bumper assembly (1) according to any one of the preceding claims, **characterised in that** a plurality of slots (8) are arranged in the connection region (5), in particular in the upper wall (9), the lower wall (3) and/or the central web (15).

9. Bumper assembly (1) according to any one of the preceding claims, **characterised in that** the slot (8) is formed longitudinally in a straight line or that the slot (8) has an octagonal contour.

10. Bumper assembly (1) according to any one of the preceding claims, **characterised in that** the slot (8) is arranged substantially centrally in the connection region(5) in relation to the transverse direction (Y) of the motor vehicle or that the slot (8) is arranged externally in the connection region (5).

## Revendications

1. Agencement de pare-chocs (1), présentant une traverse (2), laquelle est couplée à un véhicule automobile par l'intermédiaire de boîtes de collision (3), dans lequel la traverse (3) présente une paroi arrière (7) ainsi que des zones de liaison (5) dans lesquelles les boîtes de collision (3) sont couplées à la traverse (2), dans lequel la traverse (2) est conçue dans la section transversale en tant que profilé creux fermé, **caractérisé en ce que** les boîtes de collision (3) s'appliquent frontalement directement contre la paroi arrière (7) et sont couplées circonférentiellement avec un cordon de soudure et **en ce que**, dans la zone de liaison (5) d'une boîte de collision (3), dans une paroi supérieure (9), une paroi inférieure (13) et/ou une barrette centrale (5) de la traverse (2), une fente (8) orientée dans la direction longitudinale de véhicule automobile (X) est réalisée de sorte qu'un cordon de soudure (6) situé à l'extérieur dans la direction transversale de véhicule automobile (Y) entre la boîte de collision (3) et la traverse (2) est déchargé dans un scénario de collision.

2. Agencement de pare-chocs (1) selon la revendication 1 ou 2, **caractérisé en ce que** la fente (8) présente une longueur (L) qui est supérieure à 50 %, de préférence > 70 % de la profondeur (T) de la traverse (2) dans la direction longitudinale de véhicule (X).

3. Agencement de pare-chocs (1) selon l'une quelconque des revendications précédentes, **caractérisé en ce que** la fente (8) présente une largeur (B) qui est inférieure ou égale à la longueur (L) de la fente (8).

4. Agencement de pare-chocs (1) selon l'une quelconque des revendications précédentes, **caractérisé en ce qu'**une extension longitudinale de la fente (8) est disposée selon un angle de 60 à 120 degrés, de préférence de 75 à 105 degrés, le plus préférentiellement de 80 à 100 degrés, de préférence de 85 à 95 degrés par rapport à un axe longitudinal (12) de la traverse (2).

5. Agencement de pare-chocs (1) selon l'une quelconque des revendications précédentes, **caractérisé en ce que** la traverse (2) est entièrement évidée dans la zone de la fente (8).

6. Agencement de pare-chocs (1) selon l'une quelconque des revendications précédentes, **caractérisé en ce que** la traverse (2) est découpée circonférentiellement par sections dans la zone de la fente (8) et une partie restante est pliée par rabat.

7. Agencement de pare-chocs (1) selon l'une quelconque des revendications précédentes, **caractérisé en ce que** la traverse (2) présente une paroi supérieure (9), une paroi inférieure (13) et une barrette centrale (15).

8. Agencement de pare-chocs (1) selon l'une quelconque des revendications précédentes, **caractérisé en ce que** plusieurs fentes (8) sont disposées dans la zone de liaison (5), en particulier dans la paroi supérieure (9), la paroi inférieure (3) et/ou la barrette centrale (15).

9. Agencement de pare-chocs (1) selon l'une quelconque des revendications précédentes, **caractérisé en ce que** la fente (8) est conçue de manière rectiligne dans son tracé longitudinal ou **en ce que** la fente (8) est conçue selon un contour en forme de huit.

10. Agencement de pare-chocs (1) selon l'une quelconque des revendications précédentes, **caractérisé en ce que** la fente (8) est disposée sensiblement au centre de la zone de liaison (5) par rapport à la direction transversale de véhicule (Y) ou **en ce que** la fente (8) est disposée à l'extérieur de la zone de liaison (5).
